(19) Europäisches Patentamt
European Patent Office
Office européen des brevets

(11) **EP 4 613 541 B1**

(12) **EUROPEAN PATENT SPECIFICATION**

(45) Date of publication and mention
of the grant of the patent:
**17.06.2026 Bulletin 2026/25**

(21) Application number: **24200714.4**

(22) Date of filing: **17.09.2024**

(51) International Patent Classification (IPC):
**B60L 53/30** *(2019.01)* **B60L 53/35** *(2019.01)*
**B60L 53/37** *(2019.01)*

(52) Cooperative Patent Classification (CPC):
**B60L 53/35; B60L 53/30; B60L 53/37;**
B60L 2200/18; Y02T 10/70; Y02T 10/7072;
Y02T 90/14

(54) **METHOD AND SYSTEM FOR CONTROLLING THE CHARGING BOW WITH AUTOMATIC COMPENSATION STROKE**

VERFAHREN UND SYSTEM ZUR STEUERUNG DES LADEBOGENS MIT AUTOMATISCHEM AUSGLEICHSHUB

PROCÉDÉ ET SYSTÈME DE COMMANDE DE LA FLÈCHE DE CHARGE AVEC COURSE DE COMPENSATION AUTOMATIQUE

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**

(30) Priority: **07.03.2024 CN 202410258281**

(43) Date of publication of application:
**10.09.2025 Bulletin 2025/37**

(73) Proprietor: **HICI Digital Power Technology Co.,
Ltd.
Wuhan Hubei 430070 (CN)**

(72) Inventors:
• **DU, Hejun
Wuhan, 430070 (CN)**
• **YE, Quanhai
Wuhan, 430070 (CN)**
• **ZHOU, Bin
Wuhan, 430070 (CN)**
• **LU, Tianci
Wuhan, 430070 (CN)**
• **LIU, Xiaowei
Wuhan, 430070 (CN)**
• **LIU, Yulin
Wuhan, 430070 (CN)**
• **NIU, Bin
Wuhan, 430070 (CN)**
• **TIAN, Huili
Wuhan, 430070 (CN)**
• **LI, Qiancheng
Wuhan, 430070 (CN)**

(74) Representative: **Santarelli
Tour Trinity
1 bis Place de la Défense
92400 Courbevoie (FR)**

(56) References cited:
**CN-A- 109 318 752** **CN-A- 109 910 622**
**CN-A- 111 071 053** **CN-A- 111 347 898**
**CN-A- 115 352 308** **CN-A- 116 278 774**
**KR-B1- 102 490 484**

**Description**

**Technical Field**

This invention relates to the field of vehicle charging bow technology. More specifically, this invention relates to a method and system for controlling the charging bow with automatic compensation stroke.

**Background Technology**

With the development of battery technology, the energy density and charge-discharge cycles of batteries have greatly improved, and charging currents have also increased: the maximum can reach 1000A. Currently, high-power charging applications are becoming increasingly widespread, and charging bow systems are widely used in public transit operations, enabling rapid charging of buses. The charging bow is a new type of charging equipment that utilizes an expandable charging device and wireless transmission technology to achieve automatic charging for buses. The charging bow mainly includes the charging pile power module, control module, and pile-side EVCC wireless communication module, while the bus part mainly includes the BMS battery management system and vehicle-side SECC wireless communication module. When a bus enters the bus station, the expandable charging device can connect with the receiving device, and automatic charging is achieved through wireless transmission technology. Compared to traditional charging piles, the main feature of the charging bow is that it requires minimal manual intervention and can complete the charging process relatively quickly.

However, currently, the current collector system (current collector) is installed on the top of the vehicle, and the descending charging bow is installed on the wall or structural support. Moreover, the charging bow has a maximum descending stroke. Due to the different heights of various vehicles, for example, the height dimensions of large vehicles and small to medium-sized vehicles differ greatly, and the heights of vehicles from different manufacturers also vary considerably, this leads to the problem that a single charging bow system cannot adapt to charging multiple types of vehicles.

The patent CN109318752A describes a charging positioning device and its control method designed to automate the process of aligning and connecting a charging bow with a pantograph on electric vehicles. The charging positioning device integrates a frame body, cross bar, driving assembly, charging bow, sensory package, and processing module to facilitate automated charging for electric vehicles. The device utilizes the sensory package to detect the position of the pantograph and, under the control of the processing module, drives the charging bow to align and connect with the pantograph using the driving assembly.

The patent CN111071053A discloses a control method and device for a charging bow pantograph that ensures a safe and gradual descent to a bus bar at a controlled speed to prevent impact and reduce energy loss during the charging process of electric vehicles. The method involves controlling the descent of the charging pantograph to uniformly decelerate to a predetermined safe speed, which is not greater than a first set speed, before making contact with the bus bar. This safe speed is determined to correspond with the minimum contact resistance between the pantograph and the bus bar, often established through experimental data. The control device comprises a processor connected to a charging bow driving motor and a distance measuring sensor, which together execute a computer program to realize the control method.

The patent document CN116278774 A discloses a machine vision-based charging bow charging system and method designed to facilitate the charging process for electric vehicles. It comprises a charging bow, an image acquisition device, and a control unit that work in tandem to visually locate the vehicle, calculate the optimal path for movement, and guide the vehicle into the charging range autonomously. The system further includes mechanisms for emitting, receiving, and reflecting signals, as well as current detection and microcurrent generation devices, to ensure accurate connection and safe charging initiation.

The Korean patent KR102490484B1 describes an apparatus and method for diagnosing pantograph faults in electric vehicle charging systems, which detects and removes anomalies such as foreign objects on the pantograph contact points without requiring separate mechanical devices or expensive measurement modules. The system uses the charging power output to the vehicle to calculate the contact resistance, comparing it against a standard threshold to detect abnormalities. If an issue is identified, the system can alert the driver, analyze camera footage to pinpoint the location of the foreign material, and employ air or heat output devices to remove the contaminant, thus preventing potential overheating or fire hazards.

The patent document CN109910622A discloses an intelligent height-adjustable insulated arm pantograph, which is a first-of-its-kind device capable of adapting to different contact wire heights encountered in railway electrification systems. This pantograph features an insulated lower and upper arm design, an intelligent control cabinet, and a height-adjustable base, allowing it to maintain optimal operating angles and heights, thus ensuring stable current collection and extending the service life of both the pantograph and the contact wire.

**Summary of the Invention**

The invention is set out in the appended set of claims. This invention provides a method and system for controlling the charging bow with automatic compensation stroke, aiming to solve the problem in existing technology of being unable to adapt to charging multiple types of vehicles.

In the first aspect, this invention provides a method for controlling the charging bow with automatic compensation stroke, wherein the top of the charging bow is equipped with a compensation mechanism to increase the stroke of the charging bow, including:
Obtaining the actual distance $L_1$ between the charging bow and the current collector;

In response to the actual distance $L_1$ being greater than the maximum expansion distance $X_1$ of the charging bow, calculating the distance $S_2$ that the compensation mechanism descends, where $S_2 = L_1 - X_1$;

Controlling the charging bow to descend a distance of $S_1$; where the charging bow accelerates to the first speed $V_1$ at a first acceleration $a_1$, the first acceleration $a_1$ is equal to the maximum acceleration of the charging bow, the first speed $V_1$ is equal to the maximum speed of the charging bow;

In response to the completion of the charging bow's descent, controlling the compensation mechanism to descend at a second speed $V_2$, the charging bow contacts the current collector at the second speed $V_2$; and wherein the second speed $V_2$ is less than a first speed $V_1$, and the calculation formula for the second speed $V_2$ is: $V_2 = m_1 * V_3 / m_2$ ;

Where $m_1$ is the mass of the charging bow without the compensation mechanism, $m_2$ is the combined mass of the charging bow and compensation mechanism, $V_3$ is a permissible maximum speed at which the charging bow without the compensation mechanism contacts the current collector without causing damage, and the permissible speed $V_3$ is obtained through testing.

In one embodiment, the descending distance $S_1$, is equal to the maximum expansion distance X1 of the charging bow.

In one embodiment, it also includes: Measuring the contact resistance between the charging bow and the current collector during the charging process; In response to the contact resistance being greater than the normal resistance threshold, controlling the compensation mechanism to descend a set distance; If the contact resistance does not decrease to within the normal resistance threshold after the compensation mechanism descends the set distance, stopping charging and issuing an alarm.

In one embodiment, it also includes: In response to the actual distance $L_1$ being greater than the sum of the maximum expansion distance $X_1$ of the charging bow and the maximum descending distance of the compensation mechanism, issuing an alarm.

In one embodiment, it also includes: obtaining an image of the top of the vehicle, identifying the position of the current collector; determining the movement trajectory of the charging bow in the horizontal plane based on the position of the current collector; in response to the charging bow moving according to the movement trajectory, the charging bow is positioned directly above the current collector.

In one embodiment, in response to the contact resistance decreasing to within the normal resistance threshold, continuing charging.

In one embodiment, in response to the actual distance $L_1$ being equal to or less than the maximum expansion distance $X_1$ of the charging bow, the compensation mechanism does not perform any action.

In the second aspect, this invention also provides a system for controlling the charging bow with automatic compensation stroke, including a compensation mechanism, ranging sensor, current collector, charging bow and image capturing device, where the ranging sensor is used to measure the actual distance between the charging bow and the current collector, the charging bow control system also includes a processor and memory, the memory stores a computer program, the processor executes the computer program to implement the method for controlling the charging bow with automatic compensation stroke as described in any of the above claims.

Beneficial Effects

(1) Through the compensation mechanism, it is possible to charge both large vehicles and small to medium-sized vehicles simultaneously. When the charging bow operates, the charging bow moves first, followed by the compensation mechanism, and the charging bow can move at maximum speed. Since the stroke of the charging bow is generally much greater than that of the compensation mechanism, from an overall perspective, even if the compensation mechanism moves relatively slowly, the entire action process can be completed quickly, thus saving time in the connection process and improving work efficiency.
(2) Considering the complex situation on the top of the vehicle and the low precision of the ranging sensor, it is difficult to accurately determine the distance through the ranging sensor, especially after charging begins, the measurement results of the ranging sensor become even less precise. To avoid various special situations that may occur after charging begins, this solution measures the contact resistance between the charging bow and the current collector, which allows for the detection of potential issues (such as changes in vehicle position or height) without relying on distance measurement, thereby enabling alerts to be sent to operators and improving safety during charging.

**Brief Description of Figures**

The above-mentioned and other purposes, features, and advantages of the exemplary embodiments of the present invention will become easier to understand by reading the following detailed description with reference to the accompanying drawings. In the drawings, several embodiments of the present invention are shown in an exemplary rather than limiting manner, and the same or corresponding reference numbers indicate the same or corresponding parts, wherein:

Figure 1 is a schematic flow diagram illustrating the descent of the charging bow according to an embodiment not falling into the scope of appended claims;
Figure 2 is a schematic flow diagram illustrating the measurement of resistance according to an embodiment of the present invention;
Figure 3 is a schematic structural diagram of the compensation mechanism according to an embodiment of the present invention;
Figure 4 is a schematic structural diagram of the charging bow according to an embodiment of the present invention;
Figure 5 is a schematic system diagram according to an embodiment of the present invention.

Reference signs:

10 - Compensation mechanism; 12 - Charging bow; 13 - Ranging sensor; 14 - Image capturing device; 22 - Current collector.

## Detailed Description of Embodiments

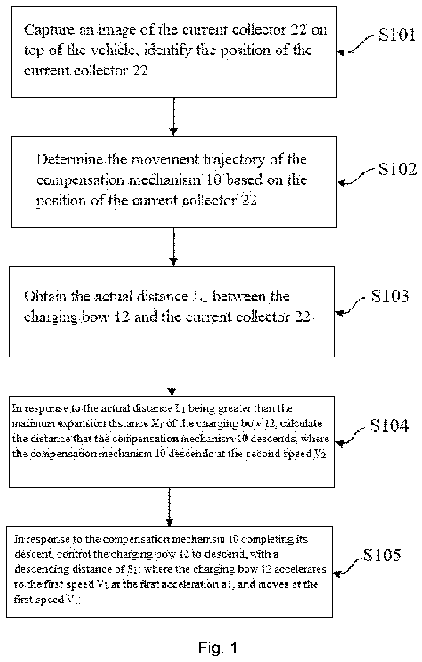

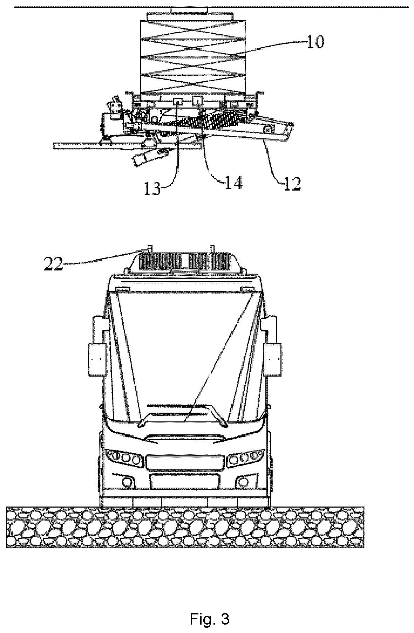

The following will clearly and completely describe the technical solutions in the embodiments of the present invention in conjunction with the accompanying drawings of the embodiments of the present invention. Obviously, the described embodiments are only a part of the embodiments of the present invention, not all of the embodiments. Based on the embodiments of the present invention, all other embodiments obtained by those skilled in the art without creative work are within the scope of protection of the present invention.
The specific implementation methods of the present invention will be described in detail below in conjunction with the accompanying drawings.
As shown in Figure 3, the method for controlling charging bow with automatic compensation stroke includes a compensation mechanism 10, a ranging sensor 13, a charging bow 12, and a current collector on the vehicle roof. Specifically, the current collector has a current collector strip 22, and the ranging sensor 13 is installed on the compensation mechanism 10 to detect the actual distance $L_1$ between the charging bow 12 and the current collector strip 22. The maximum expansion distance of the charging bow 12 is $X_1$, and the maximum descending distance of the compensation mechanism 10 is $X_2$. When the compensation mechanism 10 extends and retracts vertically, the charging bow 12 can move synchronously with the compensation mechanism 10. Additionally, an image capturing device 14 is installed on the compensation mechanism 10 to capture images of the current collector strip 22 on the vehicle roof.
In one embodiment, the compensation mechanism 10 is an extendable component, such as an electric telescopic rod or an electric telescopic bracket. In this embodiment, the compensation mechanism 10 is mounted on the wall through a cross-rail, which can control the horizontal movement of the compensation mechanism 10. The charging bow 12 is installed at the extendable end of the compensation mechanism 10, allowing the compensation mechanism 10 to move the charging bow 12 vertically. When the charging bow 12 moves downward and connects with the current collector strip 22, it can charge the vehicle.
As shown in Figure 1, the specific steps of the method for controlling charging bow with automatic compensation stroke, where steps S101 - S104 fall into the scope of the appended claims and step S105 does not fall into the scope of the appended claims, are as follows:
Step S101: Capture an image of the current collector strip 22 on the vehicle roof and identify the position of the current collector strip 22.
In one embodiment, the image capturing device 14 is used to capture images of the current collector strip 22 on the vehicle roof. For example, a CCD/CMOS camera can be used to capture images of the current collector strip 22 on the vehicle roof, thereby obtaining the image of the current collector strip 22 and identifying its position.
Step S102: Determine the movement trajectory of the compensation mechanism 10 based on the position of the current collector strip 22.
In one embodiment, the movement trajectory of the compensation mechanism 10 includes movement in both horizontal and vertical directions. Specifically, the center axes of the current collector strip 22 and the charging bow 12 are identified, where both axes are aligned with the vehicle's longitudinal direction. Then, the movement trajectory of the compensation mechanism 10 is planned. Since the compensation mechanism 10 moves synchronously with the charging bow 12, the position of the charging bow 12 changes as the compensation mechanism 10 moves. Specifically, it is determined whether the center axis of the current collector strip 22 completely aligns with the center axis of the moved charging bow 12, where both axes are parallel to the vehicle's longitudinal direction. When the center axes of the current collector strip 22 and the charging bow 12 are completely aligned, the compensation mechanism 10 is controlled to move horizontally. After the charging bow 12 moves according to the trajectory, if the center axes of the current collector strip 22 and the charging bow 12 are completely aligned, it indicates that the charging bow 12 is directly above the current collector strip 22.
It should be noted that to determine whether the center axis of the current collector strip 22 is completely aligned with the center axis of the moved charging bow 12, another image of the current collector strip 22 needs to be captured. This is to check if the current center axis of the current collector strip 22 is completely aligned with the center axis of the charging bow 12.

In another embodiment, during the movement of the charging bow 12, multiple images of the charging bow 12 and the current collector strip 22 can be captured to determine the angle difference between their center axes. When the charging bow 12 moves directly above the current collector strip 22, if the angle difference between their center axes is greater than a preset angle, an alarm is triggered; if the angle difference is within the preset angle, no alarm is triggered. In this embodiment, the preset angle is 5 degrees, while in other embodiments, it can be 3 or 4 degrees, etc.

It should be noted that when the detected angle difference between the center axes of the current collector strip 22 and the charging bow 12 is greater than 5 degrees, it indicates that the charging bow 12 has become misaligned. This misalignment could be due to a collision during the charging bow's movement or strong winds causing it to shift. In this case, a misaligned charging bow 12 descending would not be able to connect with the current collector strip 22, preventing vehicle charging. As long as the angle between the center axes of the charging bow 12 and the current collector strip 22 is less than 5 degrees, the charging bow 12 can connect with the current collector strip 22 when it descends, allowing vehicle charging to proceed.

In another embodiment, the following method can be used to adjust the deviation of the charging bow 12. First, the visual recognition system mainly captures images through the image capturing device 14 and compares them with the preset position images in the ranging sensor 13, comparing the differences in distance and angle on the X-axis (vehicle length direction) and Y-axis (vehicle width direction). If the angle between the center axis of the current collector strip 22 and the center axis of the charging bow 12 exceeds 4 degrees, and the distance is greater than 200mm, the ranging sensor 13 sends a command to the cross-rail to drive the compensation mechanism 10 to move along the X-axis and Y-axis, adjusting the angle of the charging bow 12's center axis. After the command is completed, the top image capturing device 14 captures images again and corrects them against the preset position images in the ranging sensor 13.

Specifically, first, the image capturing device 14 captures images of the current collector strip 22 and compares them with the preset position images of the current collector strip 22 in the ranging sensor 13, comparing the differences in distance and angle on the X-axis and Y-axis directions. If the angle between the center axis of the current collector strip 22 and the center axis of the charging bow 12 exceeds 4 degrees, and the distance is greater than 200mm, the ranging control device sends a command to the cross-rail to drive the compensation mechanism 10 to execute corresponding commands on the X-axis and Y-axis, thereby adjusting the angle of the charging bow 12. After the command is completed, the image capturing device 14 captures images of the current collector strip 22 again and corrects them against the preset position images in the ranging sensor 13. If the angle between the center axis of the current collector strip 22 and the center axis of the charging bow 12 is less than 4 degrees, the subsequent lowering operation of the charging bow is executed.

In one embodiment, the angle adjustment can be achieved using existing technologies such as motors, where the motor rotation drives the rotation of the charging bow 12.

Step S103: Obtain the actual distance $L_1$ between the charging bow 12 and the current collector strip 22.

In one embodiment, the ranging sensor 13 is installed on the compensation mechanism 10, then obtains the actual distance $L_1$ between the charging bow 12 and the current collector strip 22, and then calculates the descending distance of the charging bow 12 and the current collector strip 22 based on the actual distance $L_1$.

Step S104: In response to the actual distance $L_1$ being greater than the maximum expansion distance $X_1$ of the charging bow 12, calculate the distance that the compensation mechanism 10 descends, where the compensation mechanism 10 descends at the second speed $V_2$.

When the actual distance L1 is greater than the maximum expansion distance $X_1$ of the charging bow 12, meaning the charging bow 12 cannot connect with the current collector strip 22 even when extended to its limit, it is necessary to control the compensation mechanism 10 to descend a certain height. Then, based on the actual distance $L_1$ between the current collector strip 22 and the charging bow 12 measured by the ranging sensor 13, and the maximum expansion distance $X_1$ of the charging bow 12, the distance S2 that the compensation mechanism 10 needs to descend is calculated. The formula for calculating distance $S_2$ is: $S_2 = L_1 - X_1$. Then, the compensation mechanism 10 is controlled to descend at the second speed $V_2$. When the compensation mechanism 10 descends the distance S2 at the second speed $V_2$, the charging bow 12 can connect with the current collector strip 22.

In one embodiment, if the actual distance $L_1$ measured by the ranging sensor 13 is equal to or less than the maximum expansion distance $X_1$ of the charging bow 12, the compensation mechanism 10 does not execute any action, and only the charging bow 12 needs to execute an action.

To facilitate understanding, here's an example: Suppose the maximum expansion distance $X_1$ of the charging bow 12 is set to 1700mm, and the ranging sensor 13 measures the actual distance $L_1$ between the position of the charging bow 12 and the current collector strip 22 on the vehicle roof to be 1800mm. In this case, the maximum expansion distance $X_1$ of the charging bow 12 is less than the actual distance $L_1$, so it's necessary to calculate the descending height $S_2$ of the compensation mechanism 10, $S_2 = L_1 - X_1 = 100$mm, resulting in the compensation mechanism 10 needing to descend 100mm. Then the ranging sensor 13 issues a command to drive the compensation mechanism 10 to descend 100mm at the second speed $V_2$. Through these steps, the movement trajectory of the compensation mechanism 10 can be calculated based on the position of the current collector strip 22.

Step S105 (not falling into the scope of appended claims):

In response to the compensation mechanism 10 completing its descent, control the charging bow 12 to descend a distance of $S_1$; where the charging bow 12 accelerates to the first speed $V_1$ at the first acceleration $a_1$, and moves at the first speed $V_1$.

In an embodiment not falling into the scope of appended claims, when the actual distance L1 is greater than the maximum expansion distance $X_1$ of the charging bow 12, first control the compensation mechanism 10 to descend $S_2$, then control the charging bow 12 to descend a distance of $S_1$, where the first distance $S_1$ equals the maximum expansion distance $X_1$ of the charging bow 12. Specifically, the charging bow 12 accelerates to the first speed $V_1$ at the first acceleration $a_1$, and moves at the first speed $V_1$. Moreover, the first acceleration $a_1$ equals the maximum acceleration of the charging bow 12, and the first speed $V_1$ equals the maximum speed of the charging bow 12.

In an embodiment not falling into the scope of appended claims, the first speed $V_1$ is also the maximum descending speed of the charging bow 12 that will not damage the current collector strip 22. In other words, when the charging bow 12 contacts the current collector strip 22 at the first speed $V_1$, it will not cause collision damage between the charging bow 12 and the current collector strip 22. To illustrate, suppose that under safe operating conditions, the maximum speed of the charging bow 12 is $Q_1$, and its maximum acceleration is $Q_2$. The charging bow 12 would then accelerate from a stationary state to its maximum speed $Q_1$ using the maximum acceleration $Q_2$, and then maintain the maximum speed $Q_1$ while descending, until the descending distance of the charging bow 12 equals its maximum expansion distance $X_1$.

In an embodiment falling into the scope of appended claims, the formula for calculating the second speed $V_2$ is:

$$V_2 = m_1 * V_3 / m_2$$

Where $m_1$ is the mass of the charging bow 12 without the compensation mechanism 10, $m_2$ is the combined mass of the charging bow 12 and the compensation mechanism 10, $V_3$ is the permissible speed at which the charging bow 12 without the compensation mechanism 10 can contact the current collector strip 22 without causing damage. This permissible speed $V_3$ is determined through testing, for example, by determining the maximum speed that the charging bow 12 without the compensation mechanism 10 can achieve without causing damage. Generally, for a specific charging bow 12, $V_3$ is already determined through testing. Therefore, when modifying an existing charging bow 12 (e.g., adding a compensation mechanism 10), there is no need to conduct new tests. The second speed $V_2$, which is the permissible contact speed between the charging bow 12 with the compensation mechanism 10 and the current collector strip 22, can be quickly obtained using the above formula.

In an embodiment falling into the scope of appended claims, the charging bow 12 is lowered first, followed by the descent of the compensation mechanism 10. In existing technology, the movement of the charging bow 12 is usually relatively slow, meaning it generally cannot achieve high acceleration and speed, because the impact and collision damage to the current collector strip 22 must be considered. However, this embodiment allows the charging bow 12 to descend at maximum speed first, followed by the compensation mechanism 10 descending at the second speed $V_2$. Since the charging bow 12 completes its descent without contacting the current collector strip 22, and the compensation mechanism 10 descends at a slower speed, the charging bow 12 will ultimately contact the current collector strip 22 at a slower speed. Therefore, there is no need to consider the impact and collision damage to the current collector strip 22 by the charging bow 12 in this case.

In one embodiment, if the actual distance $L_1$ is greater than the sum of the maximum expansion distance $X_1$ of the charging bow 12 and the maximum descending distance of the compensation mechanism 10, an alarm is triggered. In other words, when both the charging bow 12 and the compensation mechanism 10 are extended to their maximum lengths, and the charging bow 12 still cannot connect with the current collector strip 22, an alarm is triggered to alert staff to check the situation.

According to the above description, when the charging bow 12 operates, the charging bow 12 moves first, followed by the compensation mechanism 10, and the charging bow 12 can move at its maximum speed. Generally, the travel distance of the charging bow 12 is much greater than that of the compensation mechanism 10. Therefore, from an overall perspective, even if the compensation mechanism 10 moves relatively slowly, the entire process can be completed quickly, rapidly connecting the charging bow 12 with the current collector strip 22, saving connection time and improving work efficiency.

To ensure stability and safety during the charging process, sensor chips for measuring contact resistance, signal receivers, and remote communicators are installed on the charging bow 12 and the current collector strip 22. The signal receiver is electrically connected to the sensor chip to receive the resistance value measured by the sensor chip, while the signal receiver and remote communicator are connected via remote communication, allowing the signal receiver to transmit the measured resistance value to the signal processing system remotely. Specifically, the sensor chip is installed on the current collector strip 22 by embedding, with the top of the sensor chip flush with the top of the current collector strip 22. The top of the sensor chip can also connect with the charging point of the charging bow 12 to measure the contact resistance between the charging bow 12 and the current collector strip 22 during charging. When the contact resistance exceeds the normal resistance threshold, the charging bow 12 is adjusted.

First, a pressure measuring device detects the voltage change when the charging bow 12 contacts the current collector strip 22. If the measured voltage increases from 6V to 9V, the signal transmitting device will send a signal to the charging bow 12 to execute charging, and the charging bow 12 is then controlled to start charging. The contact resistance can also be used to monitor issues that may arise during the charging process.

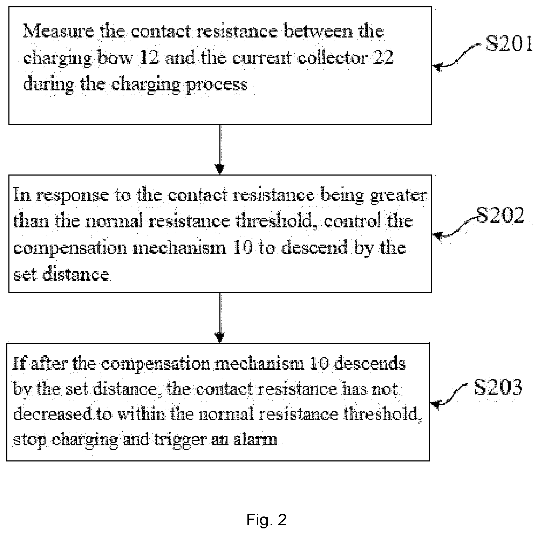

As shown in Figure 2, the specific steps for measuring contact resistance are as follows:
Step S201: Measure the contact resistance between the charging bow 12 and the current collector strip 22 during the charging process.

When the charging bow 12 descends and connects with the current collector strip 22, and then begins charging the vehicle, the sensor chip can measure the contact resistance between the charging bow 12 and the current collector strip 22.

Step S202: In response to the contact resistance being greater than the normal resistance threshold, control the compensation mechanism 10 to descend a set distance.

In one embodiment, when the contact resistance is greater than the normal resistance threshold, the compensation mechanism 10 is controlled to descend a set distance. For example, if the normal resistance threshold is $K_1$, and when charging the vehicle, the measured contact resistance between the charging bow 12 and the current collector strip 22 is $K_2$, where $K_2$ is greater than $K_1$, then the compensation mechanism 10 is controlled to descend a set distance. In this embodiment, the set distance is $X_5$, specifically, the set distance $X_5$ can be 1cm, 0.5cm, or 0.3cm. In other words, when the contact resistance between the charging bow 12 and the current collector strip 22 is greater than the normal resistance threshold, the charging bow 12 is controlled to descend a distance of $X_5$.

In one embodiment, the increase in contact resistance between the charging bow 12 and the current collector strip 22 is due to the current collector strip 22 descending during charging. For example, a vehicle lowering due to tire deflation can cause the current collector strip 22 to descend, resulting in a loose connection between the charging bow 12 and the current collector strip 22, thereby increasing the contact resistance between them.

Step S203: If the contact resistance does not decrease to within the normal resistance threshold after the compensation mechanism 10 descends the set distance, stop charging and trigger an alarm.

In one embodiment, when the contact resistance between the charging bow 12 and the current collector strip 22 is greater than the normal resistance threshold, and the charging bow 12 has descended the distance $X_5$, if the contact resistance still has not decreased to within the normal resistance threshold, it indicates that the problem is not caused by a loose connection between the charging bow 12 and the current collector strip 22. In this case, an alarm needs to be triggered to alert staff to investigate the cause.

To avoid various special situations that may occur after charging begins, this solution measures the contact resistance between the charging bow 12 and the current collector strip 22. This allows for the detection of potential issues (such as changes in vehicle position or height) that may arise after charging begins without relying on distance measurements (as the ranging sensor 13's measurement accuracy is insufficient). This enables staff to be alerted, improving safety during charging.

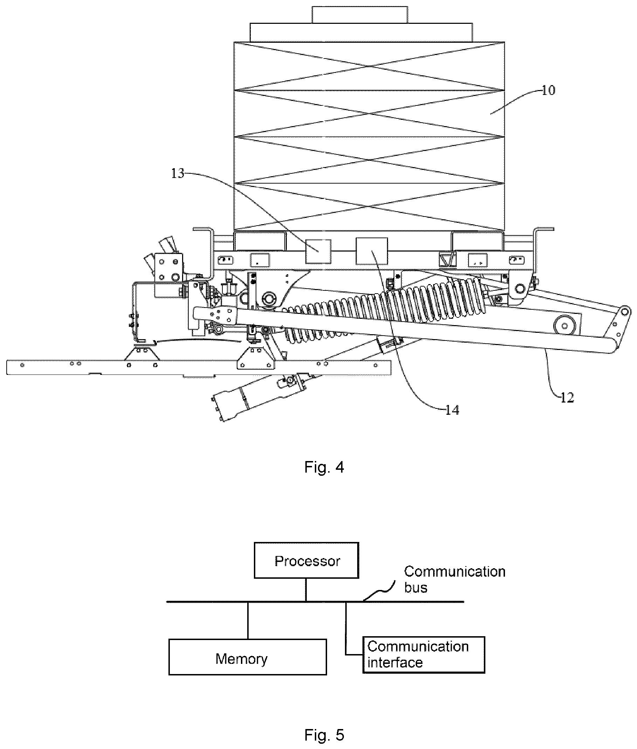

This invention also provides a system for controlling the charging bow with automatic compensation stroke. As shown in Figure 5, the system includes a processor and memory, where the memory stores computer program instructions. When the computer program instructions are executed by the processor, they implement the method for controlling the charging bow with automatic compensation stroke according to the first aspect of this invention.

In one embodiment, this invention provides a computer device with an internal structure as shown in Figure 5. This computer device includes a processor, memory, communication interface, display screen, and input device connected through a system bus. The processor of this computer device provides computing and control capabilities, and can be selected from various types such as CPU, microcontroller, DSP, or FPGA. The memory of this computer device includes non-volatile storage media and internal memory. The non-volatile storage media stores the operating system and computer programs. When the computer program is executed, it can complete the steps described in the above method embodiments, such as steps S101-S105. The internal memory provides an environment for the operation of the operating system and computer programs in the non-volatile storage media. The communication interface of this computer device is used for wired or wireless communication with external terminals, where wireless communication can be achieved through WIFI, carrier networks, NFC (Near Field Communication), or other technologies. When executed by the processor, the computer program implements a method for controlling a charging bow with automatic compensation stroke. The display screen of this computer device can be an LCD or e-ink display, and the input device can be a touch layer overlaid on the display screen, buttons, trackball, or touchpad set on the computer device's casing, or externally connected keyboard, touchpad, or mouse.

Technicians in this field can understand that the structure shown in Figure 4 is only a block diagram of part of the structure related to this invention's solution, and does not constitute a limitation on the computer device of this invention. Specifically, the computer device may include more or fewer components than shown in the figure, or combine certain components, or have a different component arrangement.

The system also includes other components familiar to technicians in this field, such as communication buses and communication interfaces, whose setup and functions are known in the field, so they will not be elaborated here.

In this invention, the aforementioned memory can be any tangible medium that contains or stores a program, which can be used by or in combination with an instruction execution system, device, or apparatus. For example, computer-readable storage media can be any suitable magnetic storage medium or magneto-optical storage medium, such as Resistive Random Access Memory (RRAM), Dynamic Random Access Memory (DRAM), Static Random-Access Memory (SRAM), Enhanced Dynamic Random Access Memory (EDRAM), High-Bandwidth Memory (HBM), Hybrid Memory Cube (HMC), etc., or any other medium that can be used to store required information and can be accessed by applications, modules, or both. Any such computer storage medium can be part of the device or accessible or connectable to the device. Any application or module described in this invention can be implemented using computer-readable/executable instructions that can be stored or otherwise maintained by such computer-readable media.

In the description of this specification, the terms "multiple" and "several" mean at least two, for example, two, three or more, unless explicitly and specifically limited otherwise.

The technical features of the above-mentioned embodiments can be combined in any way. For the sake of brevity, not all possible combinations of the technical features in the above embodiments have been described. However, as long as these combinations of technical features do not contradict each other, they should all be considered as falling within the scope recorded in this specification.

The invention is not limited to the embodiments described herein but can be amended or modified without departing from the scope of the present invention as defined by the appended claims.

## Claims

1. A method for controlling a charging bow of a charging station with automatic compensation stroke, wherein the top of the charging bow is equipped with a compensation mechanism to increase the stroke of the charging bow, comprising:

    obtaining an actual distance $L_1$ between the charging bow and a current collector;
    in response to the actual distance $L_1$ being greater than the maximum expansion distance $X_1$ of the charging bow, calculating a distance $S_2$ that the compensation mechanism descends, where $S_2 = L_1 - X_1$; **characterized in that** the method further comprises:

    controlling the charging bow to descend a distance of $S_1$; where the charging bow accelerates to the first speed $V_1$ at a first acceleration $a_1$, the first acceleration $a_1$ is equal to the maximum acceleration of the charging bow, the first speed $V_1$ is equal to the maximum speed of the charging bow;
    in response to the completion of the charging bow's descent, controlling the compensation mechanism to descend at a second speed $V_2$, the charging bow contacts the current collector at the second speed $V_2$; and wherein the second speed $V_2$ is less than a first speed $V_1$, and
    the calculation formula for the second speed $V_2$ is:

    $$V_2 = m_1 * V_3 / m_2$$

    where $m_1$ is the mass of the charging bow without the compensation mechanism, $m_2$ is the combined mass of the charging bow and compensation mechanism, $V_3$ is a permissible maximum speed at which the charging bow without the compensation mechanism contacts the current collector without causing damage, and the permissible speed $V_3$ is obtained through testing.

2. The method for controlling the charging bow with automatic compensation stroke according to claim 1, **characterized in that** the descending distance $S_1$ is equal to the maximum expansion distance $X_1$ of the charging bow.

3. The method for controlling the charging bow with automatic compensation stroke according to claim 1, **characterized by** further comprising:

    measuring the contact resistance between the charging bow and the current collector during the charging process;

in response to the contact resistance being greater than the normal resistance threshold, controlling the compensation mechanism to descend a set distance;

if the contact resistance does not decrease to within the normal resistance threshold after the compensation mechanism descends the set distance, stopping charging and issuing an alarm.

4. The method for controlling the charging bow with automatic compensation stroke according to claim 1, **characterized by** further comprising:

in response to the actual distance $L_1$ being greater than the sum of the maximum expansion distance $X_1$ of the charging bow and the maximum descending distance of the compensation mechanism, issuing an alarm.

5. The method for controlling the charging bow with automatic compensation stroke according to claim 1, **characterized by** further comprising:

obtaining an image of the top of the vehicle, identifying the position of the current collector;

determining the movement trajectory of the charging bow in the horizontal plane based on the position of the current collector;

in response to the charging bow moving according to the movement trajectory, the charging bow is positioned directly above the current collector.

6. The method for controlling the charging bow with automatic compensation stroke according to claim 3, **characterized in that** in response to the contact resistance decreasing to within the normal resistance threshold, continuing charging.

7. The method for controlling the charging bow with automatic compensation stroke according to claim 1, **characterized by** comprising:

in response to the actual distance $L_1$ being equal to or less than the maximum expansion distance $X_1$ of the charging bow, the compensation mechanism does not perform any action.

8. A system for controlling a charging bow of a charging station with automatic compensation stroke, including a compensation mechanism (10), ranging sensor (13), current collector (22), charging bow (12) and image capturing device (14), where the ranging sensor (13) is used to measure the actual distance between the charging bow (12) and the current collector (22), the charging bow control system also includes a processor and memory, the memory stores a computer program, **characterized in that** the processor executes the computer program to implement the method for controlling the charging bow with automatic compensation stroke according to any of claims 1-7.

**Patentansprüche**

1. Verfahren zur Steuerung eines Ladebogens einer Ladestation mit automatischem Ausgleichshub, wobei die Oberseite des Ladebogens mit einem Ausgleichsmechanismus zur Erhöhung des Hubs des Ladebogens ausgestattet ist, umfassend:

Erreichen eines tatsächlichen Abstands $L_1$ zwischen dem Ladebogen und einem Stromabnehmer;

als Reaktion darauf, dass der tatsächliche Abstand $L_1$ größer als der maximale Ausdehnungsabstand $X_1$ des Ladebogens ist, Berechnen eines Abstands $S_2$, um den der Ausgleichsmechanismus absenkt, wobei $S_2 = L_1 - X_1$; **dadurch gekennzeichnet, dass** das Verfahren weiter umfasst:

Steuern des Ladebogens, um einen Abstand von $S_1$ abzusenken; wobei der Ladebogen bei einer ersten Beschleunigung $a_1$ auf die erste Geschwindigkeit $V_1$ beschleunigt, die erste Beschleunigung $a_1$ gleich der maximalen Beschleunigung des Ladebogens ist, die erste Geschwindigkeit $V_1$ gleich der maximalen Geschwindigkeit des Ladebogens ist;

als Reaktion auf den Abschluss des Absenkens des Ladebogens, Steuern des Ausgleichsmechanismus, um mit einer zweiten Geschwindigkeit $V_2$ abzusenken, berührt der Ladebogen den Stromabnehmer mit der zweiten Geschwindigkeit $V_2$; und wobei die zweite Geschwindigkeit $V_2$ kleiner als eine erste Geschwindigkeit $V_1$ ist, und die Berechnungsformel für die zweite Geschwindigkeit $V_2$ lautet:

$$V_2 = m_1 * V_3 / m_2$$

wobei $m_1$ die Masse des Ladebogens ohne Ausgleichsmechanismus ist, $m_2$ die kombinierte Masse von Ladebogen und Ausgleichsmechanismus ist, $V_3$ eine zulässige Höchstgeschwindigkeit ist, bei welcher der Ladebogen ohne Ausgleichsmechanismus den Stromabnehmer berührt, ohne Schäden zu verursachen, und die zulässige Geschwindigkeit $V_3$ durch Tests ermittelt wird.

2. Verfahren zur Steuerung des Ladebogens mit automatischem Kompensationshub nach Anspruch 1, **dadurch gekennzeichnet, dass** der Absenkabstand $S_1$ gleich dem maximalen Ausdehnungsabstand $X_1$ des Ladebogens ist.

3. Verfahren zur Steuerung des Ladebogens mit automatischem Ausgleichshub nach Anspruch 1, **dadurch gekennzeichnet, dass** es weiter umfasst:

   Messen des Übergangswiderstands zwischen dem Ladebogen und dem Stromabnehmer während des Ladevorgangs;
   als Reaktion darauf, dass der Kontaktwiderstand größer als die normale Widerstandsschwelle ist, Steuern des Ausgleichsmechanismus, um um einen festgelegten Abstand abzusenken;
   wenn der Kontaktwiderstand nicht innerhalb der normalen Widerstandsschwelle absinkt, nachdem der Ausgleichsmechanismus den festgelegten Abstand abgesenkt hat, Stoppen des Ladevorgangs und Auslösen eines Alarms.

4. Verfahren zur Steuerung des Ladebogens mit automatischem Ausgleichshub nach Anspruch 1, **dadurch gekennzeichnet, dass** es weiter umfasst:
   als Reaktion darauf, dass der tatsächliche Abstand $L_1$ größer ist als die Summe des maximalen Ausdehnungsabstands $X_1$ des Ladebogens und des maximalen Absenkabstands des Ausgleichsmechanismus, Auslösen eines Alarms.

5. Verfahren zur Steuerung des Ladebogens mit automatischem Ausgleichshub nach Anspruch 1, **dadurch gekennzeichnet, dass** es weiter umfasst:

   Erhalten eines Bildes der Oberseite des Fahrzeugs, Identifizierung der Position des Stromabnehmers;
   Bestimmen der Bewegungsbahn des Ladebogens in der horizontalen Ebene basierend auf der Position des Stromabnehmers;
   als Reaktion auf die der Bewegungsbahn folgende Bewegung des Ladebogens wird der Ladebogen direkt über dem Stromabnehmer positioniert.

6. Verfahren zur Steuerung des Ladebogens mit automatischem Ausgleichshub nach Anspruch 3, **dadurch gekennzeichnet, dass** als Reaktion darauf, dass sich der Kontaktwiderstand auf innerhalb der normalen Widerstandsschwelle verringert, Fortsetzen des Ladens.

7. Verfahren zur Steuerung des Ladebogens mit automatischem Kompensationshub nach Anspruch 1, **dadurch gekennzeichnet, dass** es umfasst:
   als Reaktion darauf, dass der tatsächliche Abstand $L_1$ gleich dem oder kleiner als der maximale Ausdehnungsabstand $X_1$ des Ladebogens ist, führt der Ausgleichsmechanismus keine Aktion aus.

8. System zur Steuerung eines Ladebogens einer Ladestation mit automatischem Ausgleichshub, beinhaltend einen Ausgleichsmechanismus (10), einen Reichweitensensor (13), einen Stromabnehmer (22), einen Ladebogen (12) und eine Bilderfassungsvorrichtung (14), wobei der Reichweitensensor (13) zur Messung des tatsächlichen Abstands zwischen dem Ladebogen (12) und dem Stromabnehmer (22) verwendet wird, die Ladebogensteuerung auch einen Prozessor und Speicher umfasst, der Speicher ein Computerprogramm speichert, **dadurch gekennzeichnet, dass** der Prozessor das Computerprogramm ausführt, um das Verfahren zur Steuerung des Ladebogens mit automatischem Ausgleichshub nach einem der Ansprüche 1 bis 7 umzusetzen.

**Revendications**

1. Procédé de commande d'un arc de charge d'une station de charge avec course de compensation automatique, dans lequel la partie supérieure de l'arc de charge est équipée d'un mécanisme de compensation pour augmenter la course de l'arc de charge, comportant :

   l'obtention d'une distance réelle $L_1$ entre l'arc de charge et un collecteur de courant ;
   en réponse au fait que la distance réelle $L_1$ est supérieure à la distance d'expansion maximale $X_1$ de l'arc de charge, le calcul d'une distance $S_2$ de descente du mécanisme de compensation, où $S_2 = L_1 - X_1$ ; **caractérisé en ce que** le procédé comporte en outre :

   la commande de l'arc de charge pour sa descente sur une distance de $S_1$ ; où l'arc de charge accélère jusqu'à la première vitesse $V_1$ à une première accélération $a_1$, la première accélération $a_1$ est égale à l'accélération maximale de l'arc de charge, la première vitesse $V_1$ est égale à la vitesse maximale de l'arc de charge ;
   en réponse à l'achèvement de la descente de l'arc de charge, la commande du mécanisme de compensation pour sa descente à une deuxième vitesse $V_2$, l'arc de charge entre en contact avec le collecteur de courant à la deuxième vitesse $V_2$ ; et dans lequel la deuxième vitesse $V_2$ est inférieure à une première vitesse $V_1$, et la formule de calcul pour la deuxième vitesse $V_2$ est :

$$V_2 = m_1 * V_3 / m_2$$

où $m_1$ est la masse de l'arc de charge sans le mécanisme de compensation, $m_2$ est la masse combinée de l'arc de charge et du mécanisme de compensation, $V_3$ est une vitesse maximale admissible à laquelle l'arc de charge sans le mécanisme de compensation entre en contact avec le collecteur de courant sans provoquer de dommages, et la vitesse admissible $V_3$ est obtenue par essai.

2. Procédé de commande de l'arc de charge avec course de compensation automatique selon la revendication 1, **caractérisé en ce que** la distance de descente $S_1$ est égale à la distance d'expansion maximale $X_1$ de l'arc de charge.

3. Procédé de commande de l'arc de charge avec course de compensation automatique selon la revendication 1, **caractérisé en ce qu'**il comporte en outre :

la mesure de la résistance de contact entre l'arc de charge et le collecteur de courant pendant le processus de charge ;
en réponse au fait que la résistance de contact est supérieure au seuil de résistance normal, la commande du mécanisme de compensation pour sa descente sur une distance définie ;
si la résistance de contact ne diminue pas à l'intérieur du seuil de résistance normal après la descente du mécanisme de compensation sur la distance définie, l'arrêt de la charge et l'émission d'une alarme.

4. Procédé de commande de l'arc de charge avec course de compensation automatique selon la revendication 1, **caractérisé en ce qu'**il comporte en outre :
en réponse au fait que la distance réelle $L_1$ est supérieure à la somme de la distance d'expansion maximale $X_1$ de l'arc de charge et de la distance de descente maximale du mécanisme de compensation, l'émission d'une alarme.

5. Procédé de commande de l'arc de charge avec course de compensation automatique selon la revendication 1, **caractérisé en ce qu'**il comporte en outre :

l'obtention d'une image de la partie supérieure du véhicule, identifiant la position du collecteur de courant ;
la détermination de la trajectoire de mouvement de l'arc de charge dans le plan horizontal sur la base de la position du collecteur de courant ;

en réponse au mouvement de l'arc de charge en fonction de la trajectoire de mouvement, l'arc de charge est positionné directement au-dessus du collecteur de courant.

6. Procédé de commande de l'arc de charge avec course de compensation automatique selon la revendication 3, **caractérisé en ce qu'**en réponse à la diminution de la résistance de contact à l'intérieur du seuil de résistance normal, la charge se poursuit.

7. Procédé de commande de l'arc de charge avec course de compensation automatique selon la revendication 1, **caractérisé en ce qu'**il comporte :
en réponse au fait que la distance réelle $L_1$ est égale ou inférieure à la distance d'expansion maximale $X_1$ de l'arc de charge, le mécanisme de compensation ne réalise aucune action.

8. Système de commande d'un arc de charge d'une station de charge avec course de compensation automatique, comprenant un mécanisme de compensation (10), un capteur de portée (13), un collecteur de courant (22), l'arc de charge (12) et le dispositif de capture d'image (14), où le capteur de portée (13) est utilisé pour mesurer la distance réelle entre l'arc de charge (12) et le collecteur de courant (22), le système de commande d'arc de charge comprend également un processeur et une mémoire, la mémoire stocke un programme informatique, **caractérisé en ce que** le processeur exécute le programme informatique pour mettre en œuvre le procédé de commande de l'arc de charge avec une course de compensation automatique selon l'une quelconque des revendications 1 à 7.

Capture an image of the current collector 22 on top of the vehicle, identify the position of the current collector 22 — S101

Determine the movement trajectory of the compensation mechanism 10 based on the position of the current collector 22 — S102

Obtain the actual distance $L_1$ between the charging bow 12 and the current collector 22 — S103

In response to the actual distance $L_1$ being greater than the maximum expansion distance $X_1$ of the charging bow 12, calculate the distance that the compensation mechanism 10 descends, where the compensation mechanism 10 descends at the second speed $V_2$ — S104

In response to the compensation mechanism 10 completing its descent, control the charging bow 12 to descend, with a descending distance of $S_1$; where the charging bow 12 accelerates to the first speed $V_1$ at the first acceleration a1, and moves at the first speed $V_1$ — S105

Fig. 1

Measure the contact resistance between the charging bow 12 and the current collector 22 during the charging process — S201

In response to the contact resistance being greater than the normal resistance threshold, control the compensation mechanism 10 to descend by the set distance — S202

If after the compensation mechanism 10 descends by the set distance, the contact resistance has not decreased to within the normal resistance threshold, stop charging and trigger an alarm — S203

Fig. 2

Fig. 3

Fig. 4

Fig. 5

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- CN 109318752 A
- CN 111071053 A
- CN 116278774 A
- KR 102490484 B1
- CN 109910622 A